# EUROPÄISCHE PATENTANMELDUNG

(11) **EP 2 015 002 A1**
(43) Veröffentlichungstag der Anmeldung: **14.01.2009**
(21) Anmeldenummer: 07013379.8
(22) Anmeldetag: 09.07.2007
(51) Int. Cl.: F24J 2/54, H01L 31/042

(54) **Solar- und Photovoltaikanlage mit einem Haltegestell für Photovoltaikmodule**

(71) Anmelder: Baumann, Hinrich, 26409 Wittmund (DE); Pastuschka, Peter, 26441 Jever (DE); Kaak, Peter, 26382 Wilhelmshaven (DE)
(72) Erfinder: Baumann, Hinrich, 26409 Wittmund (DE); Pastuschka, Peter, 26441 Jever (DE); Kaak, Peter, 26382 Wilhelmshaven (DE)
(74) Vertreter: Jabbusch, Matthias

(57) **Zusammenfassung**

Bei einer Solar- und Photovoltaikanlage mit einem Haltegestell für Photovoltaikmodule (2.1,2.2), ist vorgesehen, daß das Haltegestell als flaches Kreisel-Bauteil ausgebildet ist, welches mit Fahrelementen (4.2) auf dem Boden aufsteht.

## Beschreibung

Es ist bekannt, daß mehre Solarmodulträger für den Markt vorhanden sind. Die gebräuchlichste Variante ist die auf Dachneigungen mit bis zu 30° und mehr, in südlicher Ausrichtung über Halterungen angebracht. Die Sonnenstrahlungen aus Ost und West können nicht verarbeitet werden. Durch die starre Anbringung der Module ist auch in südlicher Richtung eine hundertprozentige Einstrahlung nicht möglich. Somit werden die möglichen Leistungen einer solchen Anlage nicht voll genutzt.

Eine andere Variante ist die sonnennachgeführte Solaranlage, die in allen Größen aufgestellt werden kann. Diese Anlagen müssen mit starken Fundamenten versehen werden, denn sie werden senkrecht aufgestellt und bedürfen daher eine Baugenehmigung. Der größte Nachteil dieser Anlagen ist der Schattenwurf. Sie sind in Wohngebieten nicht aufstellbar. Bei Sturm ist ebenfalls die Standfestigkeit zu gewährleisten und eine automatische Steueranlage muß die Module aus dem Wind drehen. Flachdächer auf Garagen oder auf Industriegebäuden können mit den oben angeführt Anlagen nicht versehen werden, eine Befestigung auf dem Dach ist unmöglich.

Bei Freilandanlagen hat die senkrecht aufgebaute Solaranlage durch ihre große Verschattung wiederum Nachteile.

Der Erfindung liegt die Aufgabe zugrunde, eine Solar- und Photovoltaikanlage der eingangs genannten Gattung aufzuzeigen, mit der eine längere Ausnutzung des Tageslichtes ermöglicht ist und welche unkompliziert errichtet werden kann.

Diese Erfindung ist erfindungsgemäß dadurch gelöst, daß das Haltegestell als flaches Kreisel-Bauteil ausgebildet ist, welches mit Fahrelementen auf dem Boden aufsteht.

Die erfindungsgemäße Solar- und Photovoltaikanlage ist keine stationär zu verbauende. Sie ist vielmehr mobil ausgebildet, so daß sie in einfacher Weise auf einer mit Sonne beschienenen Fläche aufgestellt werden kann. Das Haltgestell hält dabei die Photovoltaikmodule, selbst steht das Haltegestell über Fahrelemente auf dem Boden auf. Das Haltegestell kann somit gedreht werden und damit vorteilhaft dem Gang der Sonne nachgeführt werden.

Dabei ist das Haltegestell flach ausgebildet, so daß es die Anordnung von Photovoltaikmodulen in einer horizontalen Ebene ermöglicht. Dadurch wird vorteilhaft verhindert, daß der Sonne zugekehrte Module von der Sonne etwas weiter entfernte Module beschatten. Zudem ist ein flaches Haltegestell weniger windanfällig und es kann mit diesem Haltegestell eine vorhandene Aufstellfläche optimal ausgenutzt werden.

Nach einer ersten Weiterbildung der Erfindung ist vorgesehen, daß die Solar- und Photovoltaikanlage zumindest einen Lichtsensor aufweist. Mit diesem Lichtsensor ist die Richtung des maximalen Lichteinfalls meßbar. Der Sensor kann auf geeignete Weise mit einer Steuerung für einen Antrieb der Fahrelemente verschaltet sein, so daß ein selbsttätiges Nachführen des Haltegestells ermöglicht ist.

Das Kreiselbauteil ist vorzugsweise als Profilrahmenkonstruktion ausgebildet. Diese Profilrahmenkonstruktion weist die erforderliche mechanische Festigkeit zur Halterung von Photovoltaikmodulen auf.

Die Photovoltaikmodule sind nach einer Weiterbildung der Erfindung an Profilen der Profilrahmenkonstruktion neigungsveränderlich zur Horizontalen angelenkt. Durch die Veränderung der Neigung ist eine verschieden schräge Anstellung der regelmäßig plattenförmig ausgebildeten Photovoltaikmodule ermöglicht. Dadurch können die Photovoltaikmodule dem jahreszeitlichen Höhenstand der Sonne über dem Horizont angepaßt werden, um zu jeder Jahreszeit einen vertikalen Einfall des Sonnenlichtes auf die Oberflächen der Photovoltaikmodule zu gewährleisten.

Ein Ausführungsbeispiel der Erfindung, aus dem sich weitere erfinderische Merkmale ergeben, ist in der Zeichnung dargestellt. Es zeigen:
- Fig. 1:: eine Draufsicht auf eine erfindungsgemäße Solar- und Photovoltaikanlage,
- Fig. 2 und 2a:: Teilseitenansichten der Vorrichtung nach Fig. 1,
- Fig. 3:: eine schematische Draufsicht der Vorrichtung nach Fig. 1, und
- Fig. 4:: eine weitere Draufsicht der Vorrichtung nach Fig. 1.

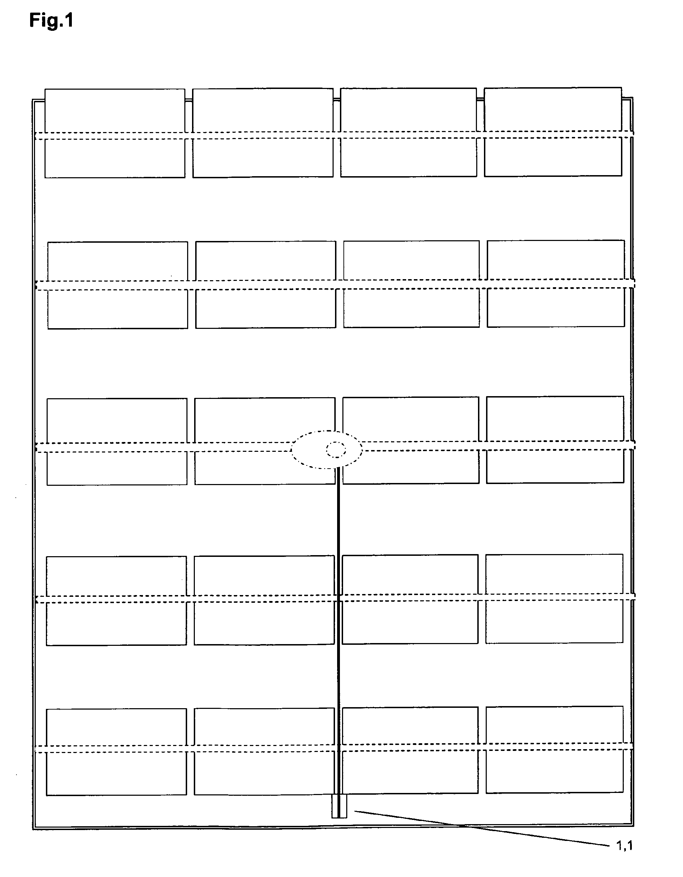

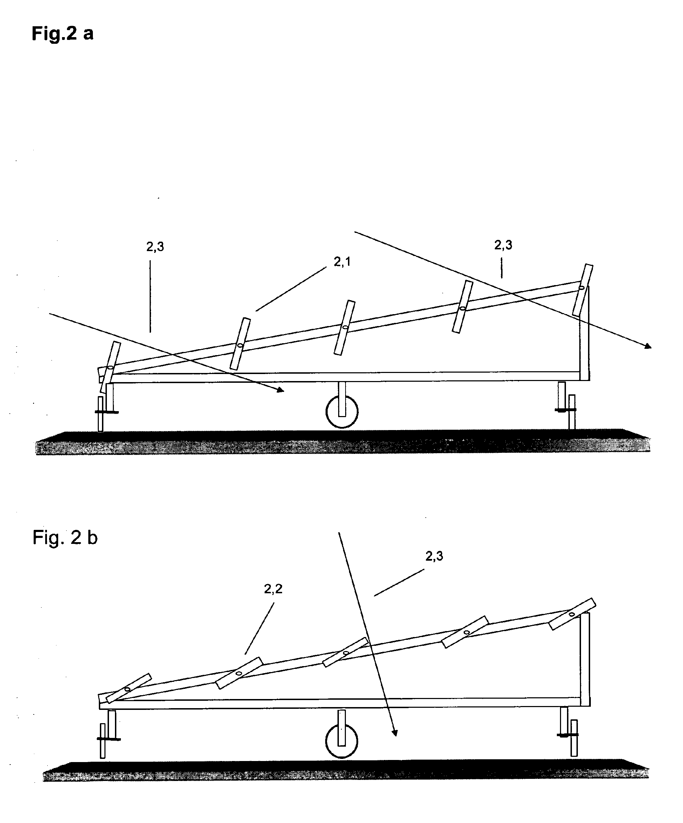

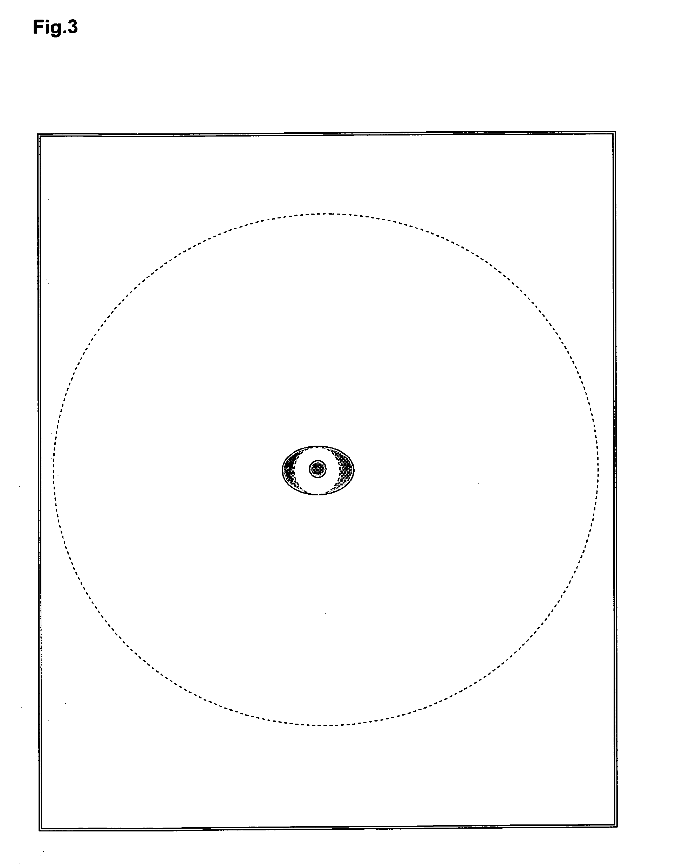

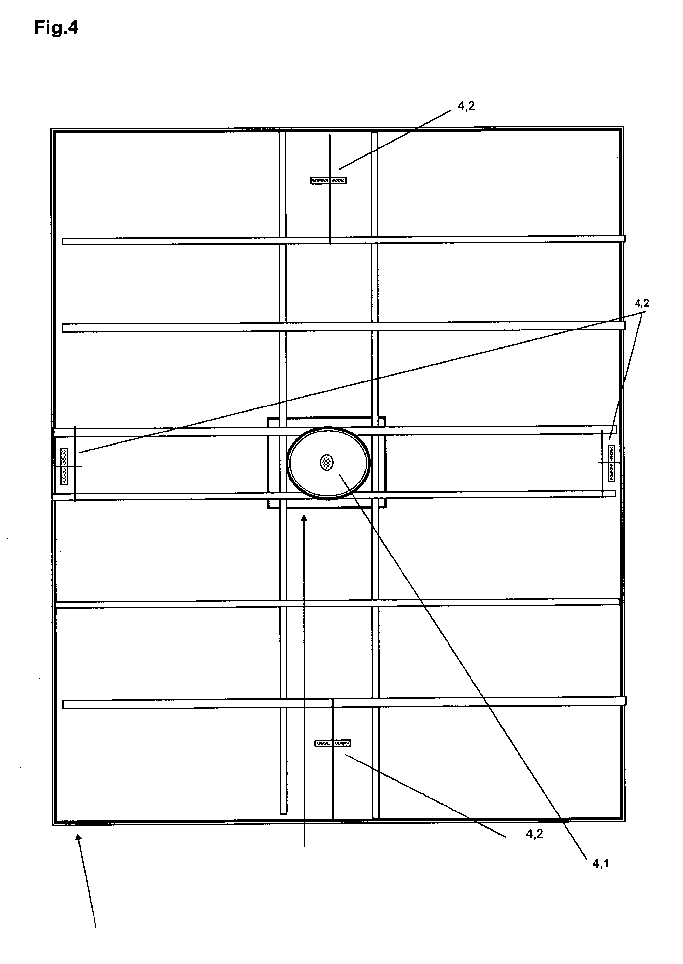

Die erfindungsgemäße Solar und Photovoltaikanlage ist gekennzeichnet durch ihre niedrige (Fig. 2) sich über die Fläche ausdehnende Bauart (Fig. 1), wobei sie sich um ihre eigene Mittelachse dreht, (Fig.3). Die Mittelachse ist keinen statischen Belastungen ausgesetzt, sondern dient nur als Zentrierung bei der Drehung. Die von der Mittelachse (Fig. 4.1) ausgehende Konstruktion (Fig. 4) wird durch Räder (Fig. 4.2) an den Außenseiten elektrisch in Kreisform (Fig. 3) angetrieben. Durch den automatischen Elektroantrieb, Lenkung und Antrieb durch Sonneneinstrahlung, wird die horizontale Bewegung von Ost nach West erreicht. Diese sonnennachgeführte Drehung des Flachkreisels ermöglicht die horizontale Sonneneinstrahlung von immer annähernd 90 Grad.

Die vertikale Sonneneinstrahlung (Fig. 2.3) verändert sich durch die tiefer oder höher stehende Sonne (Fig. 2). Durch Kippbewegungen der Module (Fig. 2.1) wird ein senkrechter Stand bei tief stehender Sonne oder (Fig. 2.2) ein flach liegendes Modul bei hoch stehender Sonne erreicht.

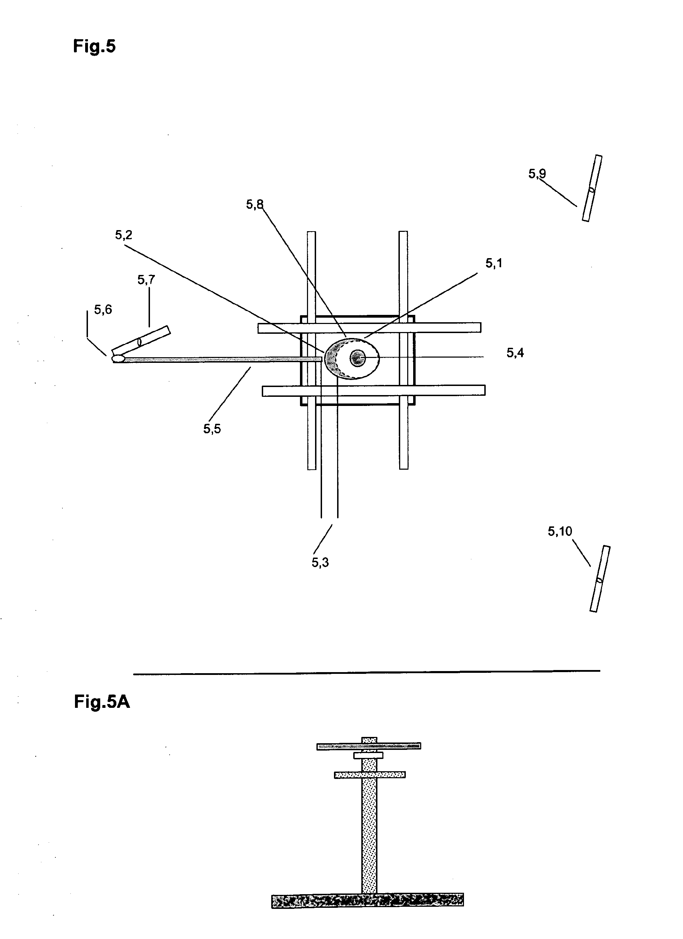

Die vertikale Bewegung der Module wird durch die Drehbewegung des gesamten Flachkreisels um den feststehenden Excenter (Fig. 5 A) erwirkt. Die flachen Seiten des Excenters sind nach Ost und West ausgerichtet, (Fig. 5.1) die Erhebung des Excenters (Fig. 5.2) sie beträgt ca. 35 cm (Fig. 5.3) ist nach Süden gerichtet. Vom Mittelpunkt aus (Fig. 5.4) gesehen, ist die Schubstange in südlicher Stellung um 35 cm länger (Fig. 5.5). Mit einem Gelenk (Fig. 5.6) ist die Schubstange am unteren Rand der Modulreihe (Fig. 1.1) befestigt und schwenkt die gesamte Modulreihe in die Mittagsposition, so daß die hoch stehende Sonne im rechten Winkel auf die Module eintrifft (Fig. 5.7). Der Flachkreisel wird durch die weiter wandernde Sonne automatisch nach Westen gedreht, die Schubstange (Fig. 5.5) trifft auf die flache Seite des Excenters (Fig. 5.8), dadurch ist die Schubbewegung um 35 cm zurückgegangen, und das Modul steht beinahe senkrecht, um die tiefstehende Abendsonne im rechten Winkel einzufangen (Fig. 5.9).

Am nächsten Morgen trifft die aufgehende Sonne auf ein externes Führungsmodul, diese Sonneneinstrahlungen bewirken den Rücklauf des gesamten Kreisels in die sogenannte Nullstellung. Alle Module stehen nahezu in senkrechter Stellung, empfangen die Morgensonne ab 13.5 Grad, ohne jegliche Verschattung (Fig. 5.10).

In Fig. 2 a ist die Neigung bzw. Kippung des Photovoltaikmoduls 2.1 am tiefsten Stand der Sonne am 21. Dezember gezeigt. Fig. 2b die Kippung des Photovoltaikmoduls 2.2 am 21. Juni, dem Tag mit dem höchsten Sonnenstand.

## Patentansprüche

1. Solar- und Photovoltaikanlage mit einem Haltegestell für Photovoltaikmodule, **dadurch gekennzeichnet,**
**daß** das Haltegestell als flaches Kreisel-Bauteil ausgebildet ist, welches mit Fahrelementen auf dem Boden aufsteht.

2. Solar- und Photovoltaikanlage nach Anspruch 1, **dadurch gekennzeichnet, daß** sie zumindest einen Lichtsensor aufweist.

3. Solar- und Photovoltaikanlage nach Anspruch 1, **dadurch gekennzeichnet, daß** das Kreisel-Bauteil eine Profilrahmenkonstruktion ist.

4. Solar- und Photovoltaikanlagen nach Anspruch 3, **dadurch gekennzeichnet, daß** die Photovoltaikmodule an Profilen neigungsveränderlich zur Horizontalen angeordnet ist.
